Europäisches Patentamt

European Patent Office

Office européen des brevets

(19)

(11) Veröffentlichungsnummer: **0 187 891**
**B1**

(12)

# EUROPÄISCHE PATENTSCHRIFT

(45) Veröffentlichungstag der Patentschrift: **14.11.90**

(51) Int. Cl.⁵: **F 16 J 15/32**

(21) Anmeldenummer: **85107716.4**

(22) Anmeldetag: **21.06.85**

(54) **Radialwellendichtring.**

(30) Priorität: **15.01.85 DE 3501066**

(43) Veröffentlichungstag der Anmeldung:
**23.07.86 Patentblatt 86/30**

(45) Bekanntmachung des Hinweises auf die
Patenterteilung:
**14.11.90 Patentblatt 90/46**

(84) Benannte Vertragsstaaten:
**AT BE DE FR GB IT NL SE**

(56) Entgegenhaltungen:
**DE-A-3 221 526**
**DE-A-3 329 386**
**GB-A-1 547 346**
**GB-A-2 141 797**
**GB-A-2 153 020**

(73) Patentinhaber: **Firma Carl Freudenberg**
**Höhnerweg 2-4**
**D-6940 Weinheim/Bergstrasse (DE)**

(72) Erfinder: **Fuchs, Dieter**
**Asternweg 8**
**D-6086 Riedstadt (DE)**
Erfinder: **Schmitt, Wolfgang**
**Alexanderstrasse 53**
**D-6806 Viernheim (DE)**

Courier Press, Leamington Spa, England.

## Beschreibung

Die Erfindung betrifft einen Radialwellendichtring, umfassend ein aus einer ebenen Scheibe mit planparallelen Oberflächen erzeugtes Dichtelemente aus einem nichtelastomeren Kunststoff, vorzugsweise aus PTFE, das im Bereich seines Außenumfanges in einem Versteifungsring festgelegt und im Bereich seines Innenumfanges kalt in axialer Richtung vorgewölbt ist und unter einer Vorspannung an der Welle anliegt.

Auf einen Radialwellendichtring der vorgenannten Art nimmt die DE—A—25 53 290 bezug. Dieser enthält ein aus einer ebenen Scheibe erzeugtes Dichtelement. Dieses ist im Bereich seines Innenumfanges unter Bildung eines zylindrischen Endabschnittes in Richtung des abgedichteten Raumes vorgewölbt und weist in dem die abzudichtende Welle berührenden Bereich reliefartig vorspringende Rückförderrippen für Leckflüssigkeit auf. Die Erzielung eines guten Abdichtungsergebnisses ist aus diesem Grunde davon abhängig, daß die Welle mit der richtigen Geschwindigkeit umläuft. Ist die Umlaufgeschwindigkeit der Welle zu hoch, dann hat dies eine Verstärkung der Förderwirkung der Rippen zur Folge, und es kann neben einer Mangelschmierung im Bereich der dynamischen Abdichtungszone zur Förderung von Staub aus der Umgebung in die dynamische Abdichtungzone und ggf. in den abgedichteten Raum kommen. Beides ist unerwünscht und kann einen vorzeitigen Ausfall der Dichtung zur Folge haben.

Bei nachlassender Umlaufgeschwindigkeit läßt auch die durch die Rippen verursachte Förderwirkung in Richtung des abgedichteten Raumes nach. Unterhalb einer bestimmten Grenzgeschwindigkeit kann dadurch abgedichtetes Medium insbesondere im Bereich der Zwischenräume der einzelnen Rippen die dynamische Abdichtungszone in Richtung der Außenseite passieren und hier zu Verschmutzungen führen. Insbesondere bei Wellenstillstand und in Fällen, in denen sich in dem abgedichteten Raum ein Druck aufbauen kann, is dieser Effekt deutlich zu beobachten und unerwünscht.

Eine Verwendung solcher Dichtungen ist in bezug auf die Abdichtung der Kurbelwelle eines Zweitaktmotors nicht möglich, weil beim Auftreten von Unterdruck Außenluft und ggf. darin enthaltene Verunreinigungen die dynamische Abdichtungszone leicht in Richtung des abgedichteten Raumes zu passieren vermögen. Das Vorhandensein der Rippen begünstigt diesen Vorgang.

Die GB—A—2 141 797 nimmt bezug auf einen Radialwellendichtring ähnlich der vorstehend beschriebenen Ausführung, bei dem das Gehäuse auf der druckabgewandten Seite der Dichtscheibe über deren Einspannstelle hinaus nach innen verlängert ist und die Obverfläche der abzudichtenden Welle nahezu erreicht. Die Dichtgscheibe hat eine Dicke von 0,64 bis 1,27 mm und ein Profil, das zwischen der Oberfläche der abzudichtenden Welle und der Einspannstelle nur schwach in sich gewölbt ist. Ein Hinweis auf die Verwendung eines solchen Radialwellendichtringes in bezug auf die Richtung wechselnde Drücke wird nicht erwähnt.

Ein weiterer Radialwellendichtring ähnlicher Bauart is bekannt aus der GB—A—2 153 020. Die Dichtscheibe ist auch bei dieser Ausführung während der bestimmungsgemäßen Verwendung nur schwach in sich gewölbt und im Bereich des Außenumfanges in einem Versteifungsring aus Kunststoff festgelegt. Ein Hinweis auf die Verwendung beim Auftreten von die Richtung wechselnden Drücken ist nicht enthalten.

Der Erfindung liegt die Aufgabe zugrunde, einen Radialwellendichtring der eingangs genannten Art derart weiterzuentwickeln, daß unabhängig davon, ob sich die abgedichtete Welle im Stillstand befindet oder einer Drehbewegung ausführt stets ein gutes Abdichtungsergebnis auch beim Auftreten von die Richtung wechselnden Drücken gewährleiset ist und der sich dadurch gut für die Abdichtung der Kurbelwelle eines Zweitacktmotors eignet.

Erfindungsgemäß zeichnet sich ein Radialwellendichtring der eingangs genannten Art dadurch aus, daß in bezug auf die Abdichtung der Kurbelwelle eines Zweitaktmotors die Scheibe bei einer Dicke von 0,4—0,6 mm einen Innendurchmesser aufweist, der gegenüber dem Durchmesser der Welle um etwa den 3- bis 7-fachen Wert ihrer Dicke vermindert ist und daß der Abstand des Versteifungsringes von der Welle an der Einspannstelle der Scheibe 3 bis 4 mal so groß ist wie die Dicke der Scheibe wobei die Einspannstelle diejenige Stelle bezeichnet, an der die Scheibe am weitesten radial innen axial von beiden Seiten abgestützt ist.

Das Dichtelement des erfindungsgemäß vorgeschlagenen Radialwellendichtringes ist gegenüber der Ausführung nach dem eingangs beschriebenen Stand der Technik wesentlich kleiner und kompakte dimensioniert, was indessen vollkommen ausreichend ist in Hinblick auf die im normalen Maschinenbau auftretenden radialen Verlagerungen der abzudichtenden Welle. Insbesondere Wellen mit einem Durchmesser im Bereich zwischen 10 und 40 mm lassen sich unter Verwendung des erfindungsgemäßen Radialwellendichtringes ausgezeichnet abdichten.

Die axiale Erstreckung der dynamisch abgedichteten Zone ist hierdurch außerordentlich kurz bemessen, was die Gewährleistung de erforderlichen Schmierung durch das abzudichtende Medium in diesem kritischen Bereich begünstigt. Von großer Bedeutung ist diesbezüglich auch die Verwendung von nichtelastomeren Kunststoff für die Herstellung des Dichtelementes, insbesondere von PTFE.

Die Scheibe kann vor der Montage des Dichtringes im Bereich ihres Innenumfanges kegelig in axialer Richtung vorgewölbt werden, beispielsweise unter Zuhilfenahme eines Formwerkzeuges. Dabei ist es jedoch von entscheidender Bedeutung, daß eine Erwärmung des Materials bei diesem Formungsvorgang vermieden wird, um das Rückformungsbestreben des zur Anwendung gelangenden Werkstoffes nicht zu beeinträchtigen. Eine über lange Zeiträume gleichmäßige Anpressung des Endabschnittes der Scheibe an die Obverfläche der abgedichteten Welle wird hierdurch sichergestellt. Sie unterliegt auch während des normalen Betriebes keiner Beeinträchtigung insofern, als die geringe axiale Ausdehnung der dynamischen Abdichtungszone sowie deren gute Schmierung eine stärkere Erwärmung von vornherein ausschließen.

Die Scheibe weist im Bereich ihres in axialer Richtung verformten Endabschnittes keinerlei der Oberfläche der abgedichteten Welle zugewandte, hydrodynamisch wirkende Rückförderelemente auf. Eine gute Wirksamkeit ist dadurch vollkommen unabhängig davon gewährleistet, ob sich die abgedichtete Welle im Stillstand befindet oder eine Drehbewegung ausführt. Auch wechselnde Drehrichtungen, wechselnde Umlaufgeschwindigkeiten und eine wechselnde Richtung des abzudichtenden Druckes werden verkraftet. Bei der bestimmungsgemäßen Verwendung als Kurbelwellendichtung in einem Zweitaktmotor hat sich jedoch eine Einbaulage als bevorzugt gezeigt, bei der der Innendurchmesser der Scheibe in eine von dem abgedichteten Raum abgewandte Richtung vorgewölbt ist. Der voreschlagene Radialwellendichtring eignet sich vor allem bei einer solchen Einbaulage zur Abdichtung der Kurbelwelle von beliebigen Zweitaktomotoren.

Nach einer vorteilhaften Ausgestaltung ist es vorgesehen, daß die Scheibe und die Dichtungsachse in dem von dem Versteifungsring umschlossenen Bereich etwa einen rechten Winkel einschließen. Andere gegenseitige Zuordnungen sind ohne weiteres möglich, jedoch werden bei einer rechtwinkligen Zuordnung eine besonders gute Dauerhaltbarkeit nd ein gutes Abdichtungsergebnis erzielt.

Der Versteifungsring kann auf der von der Vorwölbung abgewandten Seite der Scheibe einen Ringvorsprung aufweisen, der bis in die unmittelbare Nähe der Welle verlängert ist. Die axiale Abstützung des die dynamische Abdichtung bewirkenden Endabschnittes wird hierdurch verbessert, wobei sich als Nebeneffekt der Vorteil ergibt, daß eine Beaufschlagung der dynamischen Abdichtungszone mit von außen zugeführten Staub und Schmutz erschwert wird. Bei umgekehrter Einbaulage, wie beispielsweise bei de Abdichtung der Kurbelwelle eines Zweitaktmotors bevorzugt, word ebenfalls eine Verbesserung des Abdichtungsergebnisses erzielt. Dieses dürfte darauf zurückzuführen sein, daß die betriebsbedingten Druckpulsationen in diesem Falle durch den Ringsvorsprung des Versteifungsringes von der dynamischen Abdichtungszone im wesentlichen ferngehalten werden. Insbesondere in Fällen, in denen der Ringvorsprung des Versteifungsringes der Welle bis auf einen engen Abstand angenähert ist, werden beste Ergebnisse erzielt. Der Ringvorsprung ist innenseitig zweckmäßig durch eine Zylinderfläche begrenzt, deren axiale Länge wenigstens so groß ist wie ihr Abstand von de Welle, zweckmäßig wenigstens 3 mal und höchstens 10mal so groß.

Im Hinblick auf eine kostengünstige Erzeugung hat es sich als vorteilhaft erwiesen, wenn der Versteifungsring aus Kunststoff besteht, und unmittelbar im Bereich des Außenumfanges an der Scheibe angespritzt ist. Duroplastische Werkstoffe werden bevorzugt. Probleme hinsichtlich der gegenseitigen Festlegung und Abdichtung beider Teile lassen sich hierdurch zuverlässig unterbinden, wenn nach dem Verfahren, das in DE—PS—33 29 386 angeführt ist, vorgegangen wird.

Eine beispielhafte Ausführung des erfindungsgemäß vorgeschlagenen Radialwellendichtringes ist in der in der Anlage beigefügten Zeichnung in halbgeschnittener Darstellung wiedergegeben. Sie wird nachfolgend näher erläutert:

Das gezeigte Ausführungsbeispiel betrifft eine Dichtung zur Verwendung an der Kurbelwelle eines Zweitakt-Motors. Diese besteht aus dem Versteifungsring 2 und der Scheibe 1 Ersterer ist aus glasfaserverstärktem Phenolharz erzeugt und unmittelbar an den Außenumfang der Scheibe 1 angeformt. Die Scheibe ist dadurch unlösbar und flüssigkeitsdicht in dem Versteifungsring festgelegt. Sie schließt im Bereich der Festlegungszone mit der Dichtungsachse einen rechten Winkel ein.

Im Bereich des Innendurchmessers ist die aus PTFE bestehende Scheibe in Richtung der von dem abgedichteten Raum abgewandten Seite vorgewölbt und liegt mit einer beidseits durch Kegelflächen begrenzten Dichtkante an der Oberfläche der abgedichteten Welle an.

Die zur Anwendung gelangende Scheibe hat in bezug auf die Abdichtung einer Welle von 20 mm Durchmesser einen Außendurchmesser von 27 mm, einen Innendurchmesser von 18,2 mm und eine Dicke von 0,5 mm. Die axiale Erstreckung der sich nach dem Einbau ergebenden Anlagefläche zwischen der Scheibe und der Oberfläche der abgedichteten Welle beträgt etwa 0,3 mm und ist somit außerordentlich kurz bemessen. Der Radialwellendichtring läßt sich kostengünstig herstellen und leicht einbauen. Er gewährleistet bei einer Verwendung an der Kurbelwelle eines Zweitaktmotors ein ausgezeichnetes Abdichtungsergebnis während dessen gesamter Lebensdauer.

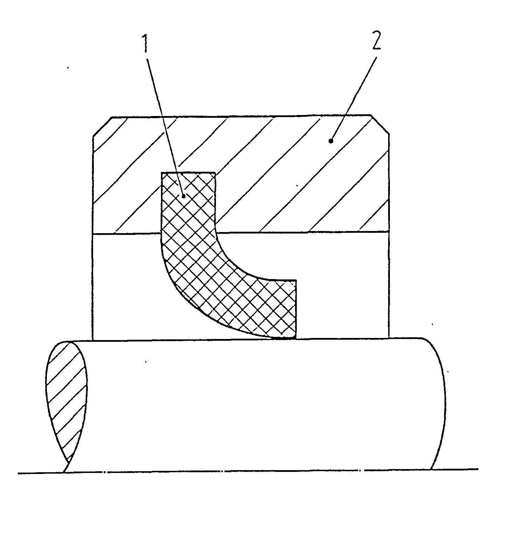

**Patentansprüche**

1. Radialwellendichtring, umfassend ein aus einer ebenen Scheibe (1) mit planparallelen Oberflächen erzeugtes Dichtelement aus einem nichtelastomeren Kunststoff, vorzugsweise aus PTFE, das im Bereich seines Außenumfanges in einem Versteifungsring (2) festgelegt und im Bereich seines Innenumfanges kalt in axialer Richtung vorgewölbt ist und unter Vorspannung an der Welle anliegt, dadurch gekennzeichnet, daß in bezug auf die Abdichtung der Kurbelwelle eines Zweitaktmotors die Scheibe (1) bei einer Dicke von 0,4 bis 0,6 mm einen Innendurchmesser aufweist, der gegenüber dem Durchmesser der Welle um etwa den 3- bis 7-fachen Wert ihrer Dicke vermindert ist und daß der Abstgand des Versteifungsringes von der Welle an der Einspannstelle der Scheibe (1) 3- bis 4-mal so groß ist wie die Dicke der Scheibe (1), wobei die Einspannstelle diejenige Stelle bezeichnet, an der die Scheibe (1) am weitesten radial innen axial von beiden Seiten abgestützt ist.

2. Radialwellendichtring nach Anspruch 1, dadurch gekennzeichnet, daß die Scheibe (1) und die Dichtungsachse in dem von dem Versteifungsring (2) umschlossenen Bereich einen rechten Winkel einschließen.

3. Radialwellendichtring nach Anspruch 1 bis 2, dadurch gekennzeichnet, daß der Versteifungsring (2) auf der von der Vorwölbung der Scheibe (1) abgewandten Seite einen nach innen weisenden Ringvorsprung aufweist, der bis in die unmittelbare Nähe der Welle verlängert ist.

4. Radialwellendichtring nach Anspruch 1 bis 3, dadurch gekennzeichnet, daß der Versteifungsring (2) aus Kunststoff besteht.

**Revendications**

1. Bague d'étanchéité radiale pour arbre comprenant un élément d'étanchéité en matériau non élastomère et, de préférence, en PTFE, réalisé au départ d'un disque plat (1) à surfaces planes parallèles qui est fixé dans la zone de sa périphérie extérieure à une bague de renfort (2), qui est pré-cintré à froid en direction axiale dans la zone de sa périphérie intérieure et qui appuie sur l'abre avec précontrainte, caractérisée en ce que, dans le cas de l'étanchéité du vilebrequin d'un moteur à deux temps, le disque (1) présente pour une épaisseur de 0,4 à 0,6 mm, un diamètre intérieur qui est inférieur au diamètre de l'arbre d'environ 3 à 7 fois l'épaisseur du disque et que la distance de la bague de renfort depuis l'arbre jusqu'à la zone de serrage du disque (1), tandis que la zone de serrage constitue la zone où le disque (1) est supporté axialement des deux côtés à la plus grande distance radiale vers l'intérieur.

2. Bague d'étanchéité radiale pour arbre selon la revendication 1, caractérisée en ce que le disque (1) et l'axe d'étanchéité forment un angle droit dans la zone comprenant la bague de renfort (2).

3. Bague d'étanchéité radiale pour arbre selon les revendications 1 et 2, caractérisée en ce que la bague de renfort (2) présente, sur le côté opposé au pré-cintrage du disque (1), une saillie annulaire tournée vers l'intérieur qui est prolongée jusqu'à proximité immédiate de l'arbre.

4. Bague d'étanchéité radiale pour arbre selon les revendications 1 à 3, caractérisée en ce que la bague de renfort (2) est réalisée en matière plastique.

**Claims**

1. An oil seal comprising a sealing element which is made of a nonelastomeric plastic, preferably of PTFE, is produced from a flat disc (1) having plane-parallel surfaces, in the region of its outer circumference is fixed in a stiffening ring (2) and in the region of its inner circumference is pre-arched cold in the axial direction, and rests under prestress against the shaft, characterized in that, in relation to the sealing of the crankshaft of a two-stroke engine, the disc (1), having a thickness of 0.4 to 0.6 mm, has an inside diameter which, compared to the diameter of the shaft, is smaller by an amount of about 3 to 7 times its thickness and in that the distance of the stiffening ring from the shaft is 3 to 4 times greater at the point of support of the disc (1) than the thickness of the disc (1), the point of support denoting the furthest point radially inwards at which the disc (1) is supported axially from both sides.

2. An oil seal according to claim 1, characterized in that the disc (1) and the seal axis in the region surrounded by the stiffening ring (2) enclose a right angle.

3. An oil seal according to either of claims 1 and 2, characterized in that, on the side facing away from the pre-arching of the disc (1), the stiffening ring (2) has an inward-pointing annular projection which is extended into the immediate vicinity of the shaft.

4. An oil seal according to any of claims 1 to 3, characterized in that the stiffening ring (2) is composed of plastic.